# EUROPÄISCHE PATENTSCHRIFT

(11) **EP 3 353 463 B1**
(45) Veröffentlichungstag und Bekanntmachung des Hinweises auf die Patenterteilung: **24.03.2021**
(21) Anmeldenummer: 16754249.7
(22) Anmeldetag: 11.08.2016
(51) Int. Cl.: F17C 13/12

(54) **DRUCKBEHÄLTERSYSTEM FÜR EIN KRAFTFAHRZEUG, KRAFTFAHRZEUG UND VERFAHREN ZUR UNTERBRECHUNG EINER FLUIDVERBINDUNG**
PRESSURE CONTAINER SYSTEM FOR A MOTOR VEHICLE, MOTOR VEHICLE AND METHOD FOR INTERRUPTING A FLUID CONNECTION
SYSTÈME DE RÉSERVOIR SOUS PRESSION POUR UN VÉHICULE À MOTEUR, VÉHICULE À MOTEUR ET PROCÉDÉ PERMETTANT D'INTERROMPRE UNE COMMUNICATION FLUIDIQUE

(30) Priorität: 23.09.2015 DE 102015218233
(43) Veröffentlichungstag der Anmeldung: 01.08.2018
(73) Patentinhaber: Bayerische Motoren Werke Aktiengesellschaft, 80809 München (DE)
(72) Erfinder: KÖGL, Leander, 83620 Vagen (DE); HEIDENREICH, Ulrich, 80637 München (DE); KRÜGER, Richard, 82057 Irschenhausen/Icking (DE)
(86) Internationale Anmeldenummer: PCT/EP2016/069139
(87) Internationale Veröffentlichungsnummer: WO 2017/050484

(56) Entgegenhaltungen:
- EP-A1- 2 777 969
- EP-A2- 1 664 617
- CA-A1- 2 860 682
- DE-A1-102005 054 894
- DE-A1-102014 001 375
- US-A- 6 041 762
- US-B1- 6 390 075

## Beschreibung

Die hier offenbarte Technologie betrifft ein Kraftfahrzeug mit einen Brennstoffzellensystem und mit einem Druckbehältersystem, ein Druckbehältersystem für ein Kraftfahrzeug sowie ein Verfahren zur Unterbrechung einer Fluidverbindung. Kraftfahrzeuge mit einem Brennstoffzellensystem als solche sind bekannt und werden auch als Fuel Cell Electrical Vehicle (FCEV) bezeichnet. In solchen Systemen werden Brenngase, z.B. Wasserstoff, eingesetzt, die leicht entflammbar sind. Derzeit existiert keine Möglichkeit, in der Handelsorganisation (d.h. den Werkstätten, Logistik, Ausstellung etc.) das Brennstoffsystem zu schließen. Das brenngasführende Anoden-Subsystem wird in vorbekannten Lösungen nur getrennt, wenn die Zündung des Kraftfahrzeuges ausgeschaltet ist. Beispielsweise wird in dem Normvorschlag ECE/TRANS/WP.29/2014/78 "Proposal for a new Regulation on hydrogen and fuel cell vehicles (HFCV)" von 2014 angeführt, dass die Trennventile, auch "shut off valves" genannt, im stromlosen Zustand die Fluidverbindung zwischen den Druckbehälter und etwaigen Versorgungsleitungen unterbrechen sollen (d.h. "normally closed valve"). Die Druckschriften US 6 390 075 B1, US 6 041 762 A und EP 1 664 617 A2 stellen vorbekannten Stand der Technik dar.

Wird beispielsweise während einer Reparatur das Anoden-Subsystem demontiert, kann theoretisch die Gefahr bestehen, dass ein Monteur oder ein weiterer Mitarbeiter die Zündung (versehentlich) einschaltet und das Trennventil somit öffnet. Sofern keine weiteren Schutzmaßnahmen, wie beispielsweise ein Überströmventil (auch "excess flow valve" genannt), vorgesehen sind, könnte das mit sehr hohem Druck gespeicherte Brenngas sehr schnell entweichen und größeren Schaden anrichten.

Auch nach einem Unfall kann es Situationen geben, in denen die Rettungskräfte die Fluidverbindung zum Drucktank kappen möchten.

Es ist eine Aufgabe der hier offenbarten Technologie, die Nachteile der vorbekannten Lösungen zu verringern oder zu beheben. Weitere Aufgaben ergeben sich aus den vorteilhaften Effekten der hier offenbarten Technologie. Die Aufgabe(n) wird/werden gelöst durch den Gegenstand des Patentanspruchs 1. Die abhängigen Ansprüche stellen bevorzugte Ausgestaltungen dar.

Die hier offenbarte Technologie betrifft ein Druckbehältersystem für ein Kraftfahrzeug. Es kann sich dabei um ein Hochdruckgasbehältersystem oder um ein kryogenes Druckbehältersystem handeln. Hochdruckgasbehältersysteme sind ausgebildet, bei Umgebungstemperaturen Brennstoff dauerhaft bei einem Druck von über ca. 350 barü, ferner bevorzugt von über ca. 500 barü und besonders bevorzugt von über ca. 700 barü zu speichern. Kryogene Druckbehältersysteme umfassen einen kryogenen Druckbehälter. Der Druckbehälter kann in einem Kraftfahrzeug eingesetzt werden, das beispielsweise mit komprimiertem ("Compressed Natural Gas" = CNG) oder verflüssigtem (LNG) Erdgas betrieben wird. Der kryogene Druckbehälter kann Brennstoff im flüssigen oder überkritischen Aggregatszustand speichern. Der Brennstoff kann beispielsweise Wasserstoff sein, der bei Temperaturen von ca. 30 K bis 360 K im kryogenen Druckbehälter gespeichert wird. Der kryogene Druckbehälter kann insbesondere einen Innenbehälter umfassen, der ausgelegt ist für Speicherdrücke bis ca. 1200 barü, bevorzugt bis ca. 875 barü, und besonders bevorzugt bis ca. 350 barü. Bevorzugt umfasst der kryogene Druckbehälter ein Vakuum mit einem Absolutdruck im Bereich von 10⁻⁹ mbar bis 10⁻¹ mbar, ferner bevorzugt von 10⁻⁷ mbar bis 10⁻³ mbar und besonders bevorzugt von ca. 10⁻⁵ mbar.

Der Druckbehälter weist ein Trennventil auf. Bevorzugt ist dieses Trennventil direkt an der Öffnung des Druckbehälters oder unmittelbar benachbart zur Öffnung angeordnet. Das Trennventil ist ausgebildet, im stromlosen Zustand die Fluidverbindung zwischen dem Druckbehälter und einen, bevorzugt allen, Brenngasverbraucher zu unterbrechen. Das Trennventil ist also ein Ventil, das als Default-Position eine geschlossene Position einnimmt, wenn das Trennventil nicht an eine Stromversorgung angeschlossen ist.

Die hier offenbarte Technologie umfasst ferner mindestens einen Sicherheitsschalter, wobei der Sicherheitsschalter ausgebildet ist, die Stromzufuhr zum Trennventil zu unterbrechen. Mit anderen Worten ist der Sicherheitsschalter ein Schalter, der die Stromversorgung vom Trennventil unterbrechen kann. Der Sicherheitsschalter ist zweckmäßig ein elektrischer Schalter, der i.d.R. mit den elektrischen Anschlüssen des Trennventils verbunden ist. Es handelt sich dabei jedoch nicht um den Zündschalter, der beispielsweise zur Inbetriebnahme bzw. zum Abstellen des Kraftfahrzeuges betätigt wird. Der Sicherheitsschalter kann zusätzlich zum Zündschalter vorgesehen sein. Vorteilhaft weist der Sicherheitstrennschalter keine weitere Funktion auf als das Trennen der Stromzufuhr zum Trennventil. Zweckmäßig unterbricht der Sicherheitstrennschalter nur die Stromzufuhr zum Brennstoffzellensystem, besonders bevorzugt nur zum Sicherheitsschalter. Andere Stromkreise werden bevorzugt also nicht unterbrochen. Für diese Funktion ist i.d.R. ein Zündschalter vorgesehen.

Ein Zündschalter ist dabei i.d.R. ein Schalter, der die elektrische Schaltkreise des Kraftfahrzeuges unterbrechen und freigeben kann, die beim Fahrbetrieb des Kraftfahrzeuges und/oder bei der Vorkonditionierung zum Fahrbetrieb eingesetzt werden. Beispielsweise wird durch den Zündschalter in einer Schalterstellung des Zündschalters die Bordnetzelektronik und Nebenverbraucher wie das Autoradio und die Lüftung mit elektrischen Strom versorgt. Der Zündschalter kann durch mechanische oder elektronische Zündschlüssel verriegelt und/oder entriegelt werden. Ein solcher Zündschalter kann auch während der Wartungsarbeiten versehentlich oder absichtlich betätigt werden.

Bevorzugt umfasst der Sicherheitsschalter einen Sicherheitsmechanismus. Der Sicherheitsmechanismus kann derart ausgebildet sein, dass nach dem Unterbrechen der Stromzufuhr die Stromzufuhr nur nach einer Autorisierung wieder zugelassen wird. Die Autorisierung kann beispielsweise durch einen Schlüssel, einen Zahlencode oder durch sonstige Maßnahmen sichergestellt werden. In einer bevorzugten Ausführung umfasst der Sicherheitsschalter ein Schloss, das ein Schließen des Stromkreises zum Trennventil nur zulässt, wenn das Schloss nicht verriegelt ist. Mit anderen Worten kann nach dem Unterbrechen der Stromzufuhr zum Trennventil der Sicherheitsschalter abgeschlossen bzw. gesichert werden. Der Sicherheitsschalter kann im abgeschlossenen Zustand dann nicht mehr betätigt werden. Ein Monteur oder ein weiterer Mitarbeiter kann dann den Sicherheitsschalter nicht (versehentlich) betätigen. Nach Abschluss der Reparatur kann der Sicherheitsschalter wieder entriegelt/entsichert werden, beispielsweise durch einen entsprechenden Schlüssel.

Bevorzugt ist der Sicherheitsschalter für Wartungsarbeiten und/oder der Rettungsarbeiten ohne Demontage weiterer Betriebskomponenten zugänglich. Betriebskomponenten sind dabei funktionelle Komponenten, die für den Betrieb des Kraftfahrzeuges zwingend montiert sein müssen, wie beispielsweise Komponenten des Brennstoffzellensystems oder des Druckbehältersystems, nicht aber etwaige Abdeckungen und/oder Verkleidungen. Im Falle eines Unfalls oder einer Reparatur ist der Sicherheitsschalter bevorzugt ohne weitere Werkzeuge bevorzugt von außen, insbesondere von außerhalb der Karosserie, zugänglich.

Die hier offenbarte Technologie betrifft ferner ein Kraftfahrzeug mit mindestens einem hier offenbarten Druckbehältersystem und mit mindestens einem Brennstoffzellensystem, welches mit dem Druckbehältersystem fluidverbunden ist, wobei das hier offenbarte Trennventil ausgebildet ist, die Fluidverbindung zu unterbrechen.

Das Brennstoffzellensystem ist beispielsweise für mobile Anwendungen wie Kraftfahrzeuge gedacht, beispielsweise als Energielieferant für eine Antriebsmaschine. In ihrer einfachsten Form ist eine Brennstoffzelle ein elektrochemischer Energiewandler, der Brennstoff und Oxidationsmittel in Reaktionsprodukte umwandelt und dabei Elektrizität und Wärme produziert. Die Brennstoffzelle umfasst eine Anode und eine Kathode, die durch einen ionenselektiven Separator getrennt sind. Die Anode weist eine Zufuhr für einen Brennstoff zur Anode auf. Bevorzugte Brennstoffe sind: Wasserstoff, niedrigmolekularer Alkohol, Biokraftstoffe, oder verflüssigtes Erdgas. Die Kathode weist beispielsweise eine Zufuhr für Oxidationsmittel auf. Bevorzugte Oxidationsmittel sind bspw. Luft, Sauerstoff und Peroxide. Der ionenselektive Separator kann bspw. als Protonenaustauschmembran (proton exchange membrane, PEM) ausgebildet sein. Bevorzugt kommt eine kationenselektive Polymerelektrolytmembran zum Einsatz. Materialien für eine solche Membran sind beispielsweise: Nafion®, Flemion® und Aciplex®. Ein Brennstoffzellensystem umfasst mindestens eine Brennstoffzelle sowie periphere Systemkomponenten (BOP-Komponenten), die beim Betrieb der mindestens einen Brennstoffzelle zum Einsatz kommen können. In der Regel sind mehrere Brennstoffzellen zu einem Brennstoffzellenstapel bzw. Stack zusammengefasst.

Die hier offenbarte Technologie betrifft ferner ein Verfahren zur Unterbrechung einer Fluidverbindung zwischen mindestens einem Druckbehälter zur Speicherung eines Brennstoffs und mindestens einem Brennstoffzellensystem eines Kraftfahrzeuges. Es umfasst die Schritte:
- Unterbrechen der Stromzufuhr zu dem hier offenbarten Trennventil, wobei das Trennventil ausgebildet ist, im stromlosen Zustand die Fluidverbindung zwischen dem Druckbehälter und dem Brennstoffzellensystem zu unterbinden; und
- Sichern der Unterbrechung der Stromzufuhr bzw. des Sicherheitsschalters vor einer nicht autorisierten bzw. unbeabsichtigten Wiederherstellung der Stromzufuhr.

Bevorzugt umfasst das Verfahren den Schritt, wonach die Unterbrechung der Stromzufuhr durch ein Schloss gesichert wird. Bevorzugt umfasst das Verfahren den Schritt, wonach vor den Beginn einer Servicearbeit am Kraftfahrzeug, insbesondere vor einem Eingriff in ein Anoden-Subsystem des Brennstoffzellensystems, die Stromzufuhr unterbrochen wird und/oder die Unterbrechung bzw. der Sicherheitsschalter gesichert wird. Bevorzugt umfasst das Verfahren den Schritt, wonach nach dem Abschluss einer am Kraftfahrzeug, insbesondere eines Eingriffs in ein Anoden-Subsystem des Brennstoffzellensystems, die Stromzufuhr wieder zugelassen wird und/oder die Unterbrechung bzw. der Sicherheitsschalter entsichert wird. Das Anoden-Subsystem umfasst dabei bevorzugt alle brenngasführenden Komponenten.

Vorteilhaft kann ein solcher Sicherheitsschalter getrennt vom einem Hochvolt-Sicherheitsschalter (auch "Hochvolt-Service-Disconnect-Schalter" genannt) ausgeführt sein, der mindestens einen Hochvolt-Stromkreis im Kraftfahrzeug unterbrechen kann.

Eine Servicearbeit an einem Kraftfahrzeug umfasst beispielsweise die Instandsetzung bzw. Reparatur, den Austausch von Komponenten/ Teilen, die Fahrzeugbergung gegebenenfalls inklusive Transport, sowie die Wartung und Kontrolle. Die hier offenbarte Technologie ist eine Möglichkeit der Deaktivierung der Brennstoff-Versorgung. Die Deaktivierung kann notwendig sein, um in einen Bereich (z.B. geschlossener Raum, beispielsweise Werkstatt) einzufahren, der keine Brennstoffbefähigung (z.B. Wasserstoffbefähigung) bzw. Brennstoffzulässigkeit hat (auch z.B. geschlossener Transport auf LkW, Park-/ Ausstellungsflächen). Die hier offenbarte Technologie kann eine zusätzliche Sicherung für ein beschädigtes bzw. verunfalltes Kraftfahrzeug darstellen, insbesondere von Kraftfahrzeugen, dessen Zustand nicht klar ist.

Die hier offenbarte Technologie betrifft mit anderen Worten eine Einführung eines Brennstoff-Disconnect-Schalters, insbesondere eines Wasserstoff-Rettungstrennschalters. Gegen ein Wiedereinschalten kann das Trennventil, der Sicherheitsschalter bzw. die Trennstelle mit einem Schloss oder durch eine andere Vorkehrung gesichert werden. Dies würde im Wartungs-/Instandsetzungsfall als auch nach einem Unfall zu tragen kommen. Es kann in einzelnen Fällen von Nutzen sein, dass brennstoffführende System gesondert vom Hochvoltsystem deaktivieren zu können, z.B. wenn ein Kraftfahrzeug in Bereiche gebracht werden muss, in denen beispielsweise ein Wasserstoffbetrieb nicht zulässig ist, oder wenn z.B. eine Leckage im Anoden-Subsystem vorliegt.

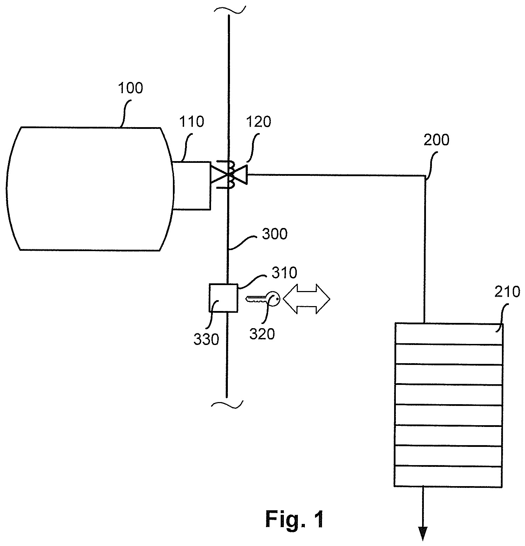

Die hier offenbarte Technologie wird nun anhand der Figur 1 erläutert. Fig. 1 zeigt das hier offenbarte Druckbehältersystem. Es ist hier an einen Brennstoffzellenstapel 210 eines Brennstoffzellensystems angeschlossen. Weitere Komponenten des Brennstoffzellensystems sowie des Druckbehältersystems wurden vereinfachend weggelassen. Direkt am Ende 110 des Druckbehälters 100 ist hier das Trennventil 120 vorgesehen. Das Trennventil 120 ist ein elektrisch betätigbares Ventil. Über den nicht vollständig dargestellten Stromkreis 300 fließt ein Strom zum Trennventil 120. Das Trennventil 120 wird geöffnet, solange ein Strom durch die Spulen des Trennventils 120 fließt. Wird nun der Stromkreis unterbrochen, beispielsweise durch das Betätigen des Zündschlüssels (nicht dargestellt) so schließt sich das Trennventil 120. Dies tritt dann ein, wenn das Kraftfahrzeug nach dem Betrieb abgestellt wird. Ferner ist hier ein Sicherheitsschalter 310 vorgesehen, der hier zusätzlich die Stromzufuhr über den Stromkreis 300 zum Magneten des Trennventils 120 unterbrechen kann. Dieser Sicherheitsschalter 310 kann unabhängig von anderen Zuständen und Parametern des Kraftfahrzeuges betätigt werden. Unterbricht der Sicherheitsschalter 310 die Stromzufuhr, so wird sicher vermieden, dass das Trennventil 120 öffnet und es zum Ausströmen des Druckgases kommt. Ferner könnten ein solcher Sicherheitsschalter 310 auch die Gefahr anderer Fehlerquellen, beispielsweise Kurzschlüsse oder falsche Ausgaben aus der Steuerung verringern, insbesondere wenn der Sicherheitsschalter 310 benachbart zum Trennventil 120 angeordnet ist. In der hier gezeigten vorteilhaften Ausbildung ist ein Schloss 330 in den Sicherheitsschalter 310 mit integriert, dass hier über einen Schlüssel 320 verriegelt wird. Wird der Sicherheitsschalter 310 abgeschlossen, ist hier sichergestellt, dass kein weiterer Mitarbeiter durch Betätigen des Sicherheitsschalters 310 den Stromkreis wieder schließt, bevor die Servicearbeiten am Kraftfahrzeug abgeschlossen sind. Sind die Arbeiten abgeschlossen, kann der verantwortliche Monteur das Schloss wieder entriegeln und den Sicherheitsschalter 310 schließen. Das Kraftfahrzeug kann dann normal betrieben werden. Zweckmäßig unterscheidet sich der Zündschlüssel vom Schlüssel 320, der im Kraftfahrzeug verbaut ist. Besonders bevorzugt unterscheidet der Schlüssel 320 generell von in Kraftfahrzeugen verbauten Zündschlüsseln.

## Patentansprüche

1. Druckbehältersystem für ein Kraftfahrzeug, umfassend:
- mindestens einen Druckbehälter (100) zur Speicherung eines Brennstoffs, wobei das Druckbehältersystem ein Trennventil (120) aufweist, dass ausgebildet ist, im stromlosen Zustand die Fluidverbindung (200) zwischen dem Druckbehälter (100) und mindestens einen Brenngasverbraucher (210) zu unterbrechen; und
- mindestens einen Sicherheitsschalter (310), wobei der Sicherheitsschalter (310) ausgebildet ist, die Stromzufuhr zum Trennventil (120) zu unterbrechen, wobei der Sicherheitsschalter (310) nicht ein Zündschalter eines Kraftfahrzeuges ist.

2. Druckbehältersystem nach Anspruch 1, wobei der Sicherheitsschalter (310) zusätzlich zu einem Zündschalter eines Kraftfahrzeuges vorgesehen ist.

3. Druckbehältersystem nach Anspruch 1 oder 2, wobei der Sicherheitsschalter (310) einen Sicherheitsmechanismus (320) umfasst, der nach dem Unterbrechen der Stromzufuhr die Stromzufuhr nur nach einer Autorisierung wieder zulässt.

4. Druckbehältersystem nach einem der vorherigen Ansprüche, wobei der Sicherheitsschalter (310) keine weitere Funktion aufweist als das Trennen der Stromzufuhr zum Brennstoffzellensystem oder zum Trennventil (120).

5. Druckbehältersystem nach einem der vorherigen Ansprüche, wobei die Autorisierung durch einen Schlüssel (320) und/oder durch einen Zahlencode erfolgt.

6. Druckbehältersystem nach einem der vorherigen Ansprüche, wobei nach dem Unterbrechen der Stromzufuhr zum Trennventil (120) der Sicherheitsschalter (310) abschließbar und/oder sicherbar ist.

7. Druckbehältersystem nach einem der vorherigen Ansprüche, wobei der Sicherheitsschalter (310) während der Wartungsarbeiten und/oder Rettungsarbeiten ohne Demontage weiterer Betriebskomponenten zugänglich ist.

8. Kraftfahrzeug mit mindestens ein Druckbehältersystem nach einem der vorherigen Ansprüche und mit mindestens einem Brennstoffzellensystem, welches mit dem Druckbehältersystem fluidverbunden ist, wobei das Trennventil (120) ausgebildet ist, die Fluidverbindung (200) zu unterbrechen.

9. Verfahren zur Unterbrechung einer Fluidverbindung zwischen mindestens einem Druckbehälter (100) und mindestens einem Brennstoffzellensystem eines Kraftfahrzeugs, umfassend den Schritt:
- Unterbrechen der Stromzufuhr zu einem Trennventil (120) durch einen Sicherheitsschalter (310), wobei das Trennventil (120) ausgebildet ist, im stromlosen Zustand die Fluidverbindung (200) zwischen dem Druckbehälter (100) und dem Brennstoffzellensystem zu unterbinden, wobei der Sicherheitsschalter (310) nicht ein Zündschalter des Kraftfahrzeuges ist.

10. Verfahren nach Anspruch 9, ferner umfassend den Schritt: Sichern der Unterbrechung der Stromzufuhr, wobei die Unterbrechung der Stromzufuhr bevorzugt durch ein Schloss (330) gesichert wird.

11. Verfahren nach einem der Ansprüche 9 oder 10, wobei Sicherheitsschalter (310) zusätzlich zu einem Zündschalter des Kraftfahrzeuges vorgesehen ist.

12. Verfahren nach einem der Ansprüche 9 bis 11, wobei durch das Betätigen des Sicherheitsschalters (310) keine weitere Funktion ausgelöst wird als das Trennen der Stromzufuhr zum Brennstoffzellensystem oder zum Trennventil (310); und/oder wobei durch das Betätigen des Sicherheitsschalters (310) die Stromzufuhr zum Brennstoffzellensystem getrennt wird, ohne dass dadurch weitere durch den Zündschalter des Kraftfahrzeuges schaltbare elektrische Schaltkreise geschaltet werden.

13. Verfahren nach einem der Ansprüche 9 bis 12, wobei die Autorisierung durch einen Schlüssel (320) und/oder durch einen Zahlencode erfolgt; und/oder wobei nach dem Unterbrechen der Stromzufuhr zum Trennventil (120) der Sicherheitsschalter (310) abschließbar und/oder sicherbar ist.

## Claims

1. Pressure container system for a motor vehicle, comprising:
- at least one pressure container (100) for storing fuel, wherein the pressure container system has an isolating valve (120) which is designed to interrupt, in the deenergized state, the fluid connection (200) between the pressure container (100) and at least one combustion gas consumer (210); and
- at least one safety switch (310), wherein the safety switch (310) is designed to interrupt the supply of power to the isolating valve (120), wherein the safety switch (310) is not an ignition switch of a motor vehicle.

2. Pressure container system according to Claim 1, wherein the safety switch (310) is provided in addition to an ignition switch of a motor vehicle.

3. Pressure container system according to Claim 1 or 2, wherein the safety switch (310) comprises a safety mechanism (320) which, after the interruption of the supply of power, permits the supply of power again only after authorization.

4. Pressure container system according to one of the preceding claims, wherein the safety switch (310) does not have a further function other than disconnecting the supply of power to the fuel cell system or to the isolating valve (120).

5. Pressure container system according to one of the preceding claims, wherein the authorization is provided by means of a key (320) and/or by means of a numerical code.

6. Pressure container system according to one of the preceding claims, wherein after the interruption of the supply of power to the isolating valve (120) the safety switch (310) can be closed off and/or secured.

7. Pressure container system according to one of the preceding claims, wherein the safety switch (310) is accessible during maintenance work and/or rescue work without removing further operating components.

8. Motor vehicle having at least one pressure container system according to one of the preceding claims and having at least one fuel cell system which has a fluid-conducting connection to the pressure container system, wherein the isolating valve (120) is designed to interrupt the fluid connection (200).

9. Method for interrupting a fluid connection between at least one pressure container (100) and at least one fuel cell system of a motor vehicle, comprising the step:
- interrupting the supply of power to an isolating valve (120) by means of a safety switch (310), wherein the isolating valve (120) is designed to prevent, in the deenergized state, the fluid-conducting connection (200) between the pressure container (100) and the fuel cell system, wherein the safety switch (310) is not an ignition switch of the motor vehicle.

10. Method according to Claim 9, also comprising the step: securing the interruption of the supply of power, wherein the interruption of the supply of power is preferably secured by means of a lock (330) .

11. Method according to one of Claims 9 and 10, wherein the safety switch (310) is provided in addition to an ignition switch of the motor vehicle.

12. Method according to one of Claims 9 to 11, wherein the actuation of the safety switch (310) does not trigger any further function other than the disconnecting of the supply of power to the fuel cell system or to the isolating valve (310); and/or wherein activating the safety switch (310) disconnects the supply of power to the fuel cell system without as a result further electrical circuits which can be switched by the ignition switch of the motor vehicle being switched.

13. Method according to one of Claims 9 to 12, wherein the authorization is implemented by means of a key (320) and/or by means of a numerical code; and/or wherein after the interruption of the supply of power to the isolating valve (120) the safety switch (310) can be closed off and/or secured.

## Revendications

1. Système de récipients sous pression destiné à un véhicule automobile, ledit système comprenant :
- au moins un récipient sous pression (100) destiné à stocker un carburant, le système de récipients sous pression comportant une soupape de séparation (120) qui est conçue pour interrompre la liaison fluidique (200) entre le récipient sous pression (100) et au moins un consommateur de gaz combustible (210) dans l'état sans courant ; et
- au moins un commutateur de sécurité (310), le commutateur de sécurité (310) étant conçu pour interrompre l'alimentation électrique de la soupape de séparation (120), le commutateur de sécurité (310) n'étant pas un commutateur d'allumage d'un véhicule automobile.

2. Système de récipients sous pression selon la revendication 1, le commutateur de sécurité (310) étant prévu en plus d'un commutateur d'allumage d'un véhicule automobile.

3. Système de récipients sous pression selon la revendication 1 ou 2, le commutateur de sécurité (310) comprenant un mécanisme de sécurité (320) qui, après interruption de l'alimentation électrique, ne permet à nouveau l'alimentation électrique qu'après autorisation.

4. Système de récipients sous pression selon l'une des revendications précédentes, le commutateur de sécurité (310) ne comportant pas d'autre fonction que la séparation de l'alimentation électrique du système de piles à combustible ou de la soupape de séparation (120) .

5. Système de récipients sous pression selon l'une des revendications précédentes, l'autorisation étant effectuée par une clé (320) et/ou par un code numérique.

6. Système de récipients sous pression selon l'une des revendications précédentes, après interruption de l'alimentation électrique de la soupape de séparation (120), le commutateur de sécurité (310) pouvant être verrouillé et/ou sécurisé.

7. Système de récipients sous pression selon l'une des revendications précédentes, le commutateur de sécurité (310) étant accessible pendant les travaux de maintenance et/ou les travaux de sauvetage sans démonter d'autres composants de fonctionnement.

8. Véhicule automobile avec au moins un système de récipients sous pression selon l'une des revendications précédentes et au moins un système de piles à combustible qui est relié fluidiquement au système de récipients sous pression, la soupape de séparation (120) étant conçue pour interrompre la liaison fluidique (200).

9. Procédé d'interruption d'une liaison fluidique entre au moins un récipient sous pression (100) et au moins un système de piles à combustible d'un véhicule automobile, le procédé comprenant l'étape suivante :
- interrompre l'alimentation électrique d'une soupape de séparation (120) au moyen d'un commutateur de sécurité (310), la soupape de séparation (120) étant conçue pour interrompre la liaison fluidique (200) entre le récipient sous pression (100) et le système de piles à combustible dans l'état sans courant, le commutateur de sécurité (310) n'étant pas un commutateur d'allumage du véhicule automobile.

10. Procédé selon la revendication 9, comprenant en outre l'étape suivante : sécuriser l'interruption de l'alimentation électrique, l'interruption de l'alimentation électrique étant de préférence sécurisée par un verrou (330).

11. Procédé selon l'une des revendications 9 et 10, un commutateur de sécurité (310) étant prévu en plus d'un commutateur d'allumage du véhicule automobile.

12. Procédé selon l'une des revendications 9 à 11, l'actionnement du commutateur de sécurité (310) ne déclenchant aucune autre fonction que la séparation de l'alimentation électrique du système de piles à combustible ou de la soupape de séparation (310) ; et/ou l'alimentation électrique du système de piles à combustible étant séparée par actionnement du commutateur de sécurité (310) sans que d'autres circuits électriques ne soient commutés par le commutateur d'allumage du véhicule automobile.

13. Procédé selon l'une des revendications 9 à 12, l'autorisation étant effectuée par une clé (320) et/ou par un code numérique ; et/ou
après interruption de l'alimentation électrique de la soupape de séparation (120), le commutateur de sécurité (310) pouvant être verrouillé et/ou sécurisé.
